(19) Europäisches Patentamt
European Patent Office
Office européen des brevets

(11) Publication number: **0 171 290**
**A2**

(12) **EUROPEAN PATENT APPLICATION**

(21) Application number: 85305645.5

(22) Date of filing: 08.08.85

(51) Int. Cl.[4]: C 08 F 214/22
//
(C08F214/22, 214:16),
(C08F214/22, 216:14)

(30) Priority: 09.08.84 US 639082
22.01.85 US 693255

(43) Date of publication of application: 12.02.86
Bulletin 86/7

(84) Designated Contracting States: BE DE FR GB IT NL

(71) Applicant: E.I. DU PONT DE NEMOURS AND COMPANY,
1007 Market Street, Wilmington Delaware 19898 (US)

(72) Inventor: Bekiarian, Paul Gregory, 316 New York Avenue,
Claymont Delaware 19703 (US)

(74) Representative: Jones, Alan John et al, CARPMAELS & RANSFORD 43 Bloomsbury Square, London, WC1A 2RA (GB)

(54) **Improved fluoropolymer.**

(57) Fluoropolymers containing 0.1 to 2 mole percent of polymerized units derived from an iodine containing monomer having the formula: $CX_2=\underset{|\atop I_m}{C}Y(R)_n$ where I is iodine, X and Y are hydrogen or fluorine, R is selected from the class consisting of (i) alkyl groups of 1 to 6 carbon atom(s) having one or two iodine atom(s) bonded to a carbon atom in the alkyl group, and additional atoms selected from the group consisting of hydrogen, chlorine and fluorine bonded to the carbon atom(s) in the alkyl group, and (ii) an ether group containing 2 to 6 carbon atoms in which the one iodine atom and other atoms selected from the group consisting of hydrogen, chlorine, and fluorine are bonded to the carbon atoms of the ether group, where n and m are zero or 1, and the sum of n and m is1, and when n is 1 and either X is fluorine, then R is (II) having a terminal ether link, said (a) units being distributed randomly along all of the polymer molecules; and a complemental amount of vinylidene fluoride and at least one other fluoro-olefin.

EP 0 171 290 A2

0171290

TITLE

# IMPROVED FLUOROPOLYMER

## FIELD OF THE INVENTION

This invention relates to an improved fluoropolymer. The fluoropolymer is improved in that it cures faster, yielding a product with a tighter cure, which releases better from the mold than many known peroxide curable fluoroelastomers. This invention also relates to a process of injection molding the improved fluoropolymer.

## BACKGROUND AND PRIOR ART

It is known in the art to produce fluoropolymers that may be cured by the reaction of a curing agent (crosslinking agent) on reactive sites in the polymer chain. In particular it is known to produce fluoropolymers of vinylidene fluoride, hexafluoropropylene and 4-bromo-3,3,4,4-tetrafluorobutene-1 in which the amount of bromine containing monomer is present in the polymer in amounts up to 3 mole % -- See Apotheker et al U.S. patent 4,035,565 especially example 10.

4-iodo-3,3,4,4-tetrafluorobutene-1 is a known chemical compound, see C. S. Rondestvedt's article in Journal of Organic Chemistry Vol 42 pages 1985-90 (1977), and its use in polymerization reactions with tetrafluoroethylene and fluorinated alkyl ethylenes is disclosed in Fritchel Belgian Patent 890,476.

Curable fluoropolymers containing iodo fluoroalkenes such as monoiodotrifluoroethylene, and alkanes such as 1,4-diiodoperfluoro-n-butane are disclosed in Tatemoto et al., U.S. patent 4,243,770.

:91-A

BRIEF DESCRIPTION OF THE INVENTION

It has now been found that fluoropolymers containing 4-iodo-3,3,4,4-tetrafluorobutene-1, and other similar iodinated monomers of the formula $CX_2=CY(R)_n$, when present as polymerized units,

$(I)_m$

formed by addition polymerization, approximately uniformly distributed along the polymer chain in the amount of 0.1 to 2 mole percent based on the total moles of polymerized units present in a fluoropolymer, said fluoropolymer also containing complemental amounts of polymerized units derived from vinylidene fluoride and at least one fluorine-containing olefin selected from the class consisting of hexafluoropropylene, pentafluoropropylene, and perfluoroalkylvinyl ethers such as perfluoroalkyl perfluorovinyl ether in which the alkyl groups have 1 to 5 carbon atoms, have unexpectedly good curing properties, and the cured product has unexpectedly good elastomeric properties. The non-iodinated portion of the fluoropolymer may optionally contain polymerized tetrafluoroethylene units, or chlorotrifluoroethylene units.

Fluoropolymers containing 4-iodo-3,3,4,4,-tetrafluorobutene-1 polymerized units or other similar polymerized units in the ranges specified, are superior in many respects to polymers containing an equal molar amount of 4-bromo-3,3,4,4-tetrafluorobutene-1 -- i.e. the polymer of U.S. 4,035,565 to Apotheker et al.

In the fluoropolymers of this invention the amount of polymerized units derived from vinylidene fluoride is typically in the range of about 45 to 80

mole percent of the units in the fluoropolymer. The amount of fluorine containing olefin, other than vinylidene fluoride in the fluoropolymers of the invention is typically in the range of 20 to 55 mole percent of the units in the fluoropolymer. More than one fluorine-containing olefin may be present as polymerized units in the polymers of this invention. Furthermore, optional components may be present in the fluoropolymers of this invention, e.g. chlorotrifluoroethylene and/or tetrafluoroethylene may be present in the amount of up to about 20 mole percent of the polymerized units in the fluoropolymer.

The superiority of polymers containing the polymerized iodo-units over the polymers containing an equal molar amount of the polymerized bromo-units is evident from results obtained in curing the two polymers. The polymer containing the iodo polymerized units cures faster; it exhibits a higher cure state; it has better compression set resistance. The uncured iodo-unit-containing polymer has a lower polymer viscosity than the uncured bromo-unit- containing polymer -- the lower viscosity is a processing advantage in many applications. When the polymers of this invention are cured in a mold to form articles, the articles are more easily separated from the mold than are articles molded from a polymer containing an equal mole fraction of the bromo-containing monomer. With the greater ease of removal of articles from the mold, the uncured compositions of the invention can be injection molded.

DETAILED DESCRIPTION

The fluoropolymers of this invention consist essentially of interpolymerized units of

(a) between 0.1 and 2 mole percent, based on the total moles of components (a) and (b) of units

derived from the addition polymerization of a compound having the formula $CX_2=\underset{(I)_m}{\underset{|}{C}}Y(R)_n$ where I is iodine, X and Y are hydrogen or fluorine, R is selected from the class consisting of (i) alkyl groups of 1 to 6 carbon atom(s) having one or two iodine atom(s) bonded to a carbon atom in the alkyl group, and additional atoms selected from the group consisting of hydrogen, chlorine and fluorine bonded to the carbon atom(s) in the alkyl group, and (ii) an ether group with an ether oxygen bonded to the $CX_2=CY$ group, containing 2 to 6 carbon atoms in which one iodine atom and other atoms selected from the group consisting of hydrogen, chlorine, and fluorine are bonded to the carbon atoms of the ether group, where n and m are zero or 1, and when n is 1, m is zero, and when m is 1, n is zero, and when n is 1 and either X is fluorine, then R is the (ii) member of the class having a terminal ether link. By terminal ether link is meant $CX_2=CY\text{-}\underline{O}\text{-}R^1$ where $-R^1$ is the remainder of the -R group as defined above. (In the polymer of this invention, these (a) units are distributed randomly approximately uniformly along all of the polymer molecules.) and,

(b) a complemental amount of units derived from the addition polymerization of vinylidene fluoride, and at least one fluorine containing olefin selected from the class consisting of hexafluoropropylene, pentafluoropropylene, a perfluoroalkyl perfluorovinyl ether in which the alkyl group contains 1 to 5 carbon atoms, and optionally tetrafluoroethylene or chlorotrifluoroethylene.

Particular monomers within the scope of the above formula that are useful in preparing the polymer compositions of the invention are $CH_2=CH(CF_2)_xI$ where x is 0 to 6, $CH_2=CHCFClCF_2I$, $CH_2=CH-O-CF_2-CF_2I$, $CF_2=CF-O-CF_2CF_2I$, $CF_2=CF-OCF_2\overset{CF_3}{\overset{|}{C}}FI$, $CH_2=CH-O-CH_2CH_2I$, $CH_2=CHCF_2CFICF_3$ and $CF_2=CFI$.

The polymers of the invention are prepared by polymerization of an iodine containing monomer with vinylidene fluoride and a fluorine containing olefin by emulsion processes in which all monomers are continuously added to the reactor in much the same manner as the prior art polymerizes a bromine containing monomer, i.e. Apotheker et al. 4,035,565 Example 10. For further details on such emulsion polymerization processes see Moore U.S. Pat. 3,839,305 and Gladding et al. U.S. Pat. 3,707,529. If all of the monomers are not continuously added to the reactor the iodine-containing units will not be distributed randomly along all of the polymer molecules. If the units are not randomly distributed along the polymer chain the resulting polymer will not exhibit the property improvements discussed below.

The cured polymers of the present invention can exhibit compression set test results superior to previously known peroxide curable fluorinated elastomers. This is believed to be due to the branching and cross-linking from the iodine containing monomers being distributed along the entire length of the individual polymer chains. In order to achieve this distribution it is necessary to continuously add all of the monomers being polymerized rather than use a batch polymerization.

If a batch polymerization is used as in U.S. 3,351,619 the less reactive monomers are not randomly distributed along the polymer chain.

In U.S. 4,243,770 an iodine containing monomeric compound is charged to the reactor at the beginning of the reaction and then a mixture of vinylidene fluoride and hexafluoropropylene are continuously charged to the reactor. In the case of iodo compounds which do not contain ethylenic unsaturation there is no branching and the iodine winds up at the end of a polymer chain through a chain transfer mechanism. In the case of an iodo compound such as $CF_2=CFCF_2CFICF_2Cl$ or $CF_2=CFCF_2CF_2I$ the reaction of the iodine as a chain transfer agent and the polymerization of the ethylenic unsaturation compete with each other. If the chain transfer reaction occurs first there is no branching. If the polymerization occurs first there is a branch, but if the originally charged iodo compound exhibits a substantially greater reactivity as a chain transfer agent than its polymerization reactivity as in the case of the above-mentioned monomer there is little branching.

The monomers of the structure $CX_2=\underset{(I)_m}{C}Y(R)_n$ as defined above have substantially greater reactivities towards addition polymerization than towards chain transfer through the iodo substituent and thus become randomly distributed along the polymer molecules.

After curing the elastomers of the present invention exhibit superior recovery than prior related elastomers after being subjected to the compression set test both when tested at room temperature and elevated temperatures.

The polymers of this invention may be cured by conventional curing agents in a conventional manner. Again, see Apotheker et al. U.S. Patent 4,035,565 for conventional information on curing such materials. Typically the polymers of this invention are mixed for example on a rubber mill, or in an extruder or in an internal mixer, or in the barrel of an injection molding machine, with an organic peroxide radical trap and acid acceptor and cured by heating the mixture to a temperature at which the peroxide decomposes. The heating step may take place in a closed mold or a mold open to the atmosphere. If desired the resultant elastomer may, after initial cure, be further cured by further heating after its removal from the mold.

A preferred class of fluoropolymer of the present invention is one that contains in addition to the polymerized iodinated monomer units and the vinylidene fluoride units, more than one type of fluorinated olefin unit, for example a polymer that contains units obtained by the polymerization of tetrafluoroethylene, and hexafluoropropylene.

Another preferred class of polymers of the invention contain the polymerized iodinated monomer units, polymerized vinylidene fluoride units and only one other fluorinated olefin unit, for example the other fluorinated olefin unit may be polymerized hexafluoropropylene units.

A third preferred class of polymers of the invention are those that contain in addition to the polymerized iodinated monomer units, vinylidene fluoride units, perfluoroalkyl perfluorovinyl ether units where the alkyl group contains 1 to 5 carbon atoms, (for example perfluoromethyl perfluorovinyl ether is ordinarily a satisfactory monomer) and optionally tetrafluoroethylene units.

The addition of other compounds such as methylene iodide ($CH_2I_2$), saturated perfluorinated iodo compounds and or isopropyl alcohol to the polymerization reaction will cause a chain transfer reaction to take place, which will reduce the gel content of the polymer, and reduce the molecular weight of the polymer. Other chain transfer agents may be used, such as those disclosed in Moore U.S. Patent 3,839,305.

The polymer of this invention may be blended with the prior art peroxide curable elastomers, such as bromine containing vinylidene fluoride polymers, and then cured to obtain results intermediate between the results of the prior art and the results of curing the polymers of this invention.

In the examples which follow various properties of the polymers of this invention and properties of products made by curing the polymers of this invention are set forth. These properties are measured according to the following tests:

A. Vulcanizate properties:

1. Mooney Viscosity

A Monsanto Mooney Viscometer is used to measure viscosity and scorch of rubber compounds. This is done by rotation of a flat cylindrical disk embedded in an elastomer specimen which is confined in a heated (100°C or 121°C, as specified) die cavity, at 90 psi, and exerts a shear strain on the specimen. The force required to turn the disk is a measure of the shearing viscosity (ASTM D 1646-81). The ML-10 is the force reading after a 1 minute preheat and a ten minute test.

2. Tensile Strength and Elongation - test temperature: 25°C die from Boston Dies. No. FD 492G or No. RB 326.

An Instron universal testing instrument is used in elongating tensile specimens to failure and

measuring the force required to make the specimen fail. Dumbbell type specimens are used in this measurement (ASTM D 412-80). In the examples the values given are measured on samples that have been cured in the mold (press cured) and then cured out of the mold (post cured), or press cured, post cured and heat aged. The curing conditions unless otherwise noted were: press cure 15 min/177°C, post cure 24 hrs/232°C, heat age 70 hrs/275°C. The tensile strength at 100% elongation is reported herein as $M_{100}$. The tensile strength at break is reported herein as $T_B$. The elongation at break is reported herein as $E_B$. Values for $M_{100}$ and $T_B$ are given in psi and MPa, conversion is MPa = 0.006895 x psi.

3. Oscillating Disc Rheometer (ODR) ASTM-D 2084-81

A polymer specimen is contained within a vulcanization chamber under 177°C and 90 psi (6.2 Mpa) pressure. For 12 minutes, a disc is oscillated through a 1° arc exerting a shear strain on the specimen. The force (torque) required to oscillate the disc is proportional to the stiffness (shear modulus) of the polymer. From ODR the following data is reported.

- $M_L$ - minimum torque of resulting curve
- $t_s2$ - minutes to 2 in.lb (0.2 N.m) rise above $M_L$
- $M_H$ - maximum torque, or torque at the end of the heating time (here 12 min), whichever is greater.
- t'90 minutes to 90% of torque increase from $M_l$ i.e., at Mc90
- Mc90 - the torque at 90% cure (i.e., Mc90 = $M_L+90(M_H-M_L)/100$

Values are given in N-M and in-lbs with conversion: N-M = 0.113 x in-lb.

0171290

4. Compression Set

The residual deformation of a material after removal of a compressive stress (to give 25% compression from original height) at an indicated test time and temperature. The samples are tested after press cure (15 min at 177°C) and post cure (24 hr at 232°C). The o-ring test is modified by the use of whole o-ring samples using a press which allows trapped air to escape. [ASTM D395-82 for pellets, ASTM D7414-part 3.8 for o-rings.] All samples tested for compression set were press cured for 15 minutes at 177°C, and post cured in a circulating air oven for 24 hours at 232°C before testing.

B. Polymer Properties:

1. % I is determined by burning a sample by the standard Schoniger oxygen flask method then converting the iodine fragments to iodate and titrating the iodate according to Standard Methods of Analytical Chemistry 6th Ed. Vol. 1, p. 522 edited by Scott.

2. % Br - as described in Cotbre, E, Trantham, H.V., Bowman, R.L. and Bethesda, The Journal of Laboratory and Clinical Medicine 51 461 (1958).

3. % gel: A 1% dispersion of polymer in methyl ethyl ketone is dissolved overnight and then centrifuged (17000 rpm, room temperature, 30 min). The concentration of the solution above the separated solids is determined by removal of solvent from a known volume of solution. The "% gel" (% insolubles) is determined by subtraction.

4. The weight percent of the polymerized units of the polymer (uncorrected for the presence of the iodine-containing polymerized units) was determined by ATR-ir - attenuated total reflectance by infrared spectroscopy the technique is further described in

Applied Spectroscopy Review, Vol 18, Issue 3, page 329 (1983 by W. L. Truett et al.).

The following examples illustrate the invention and some of the examples demonstrate the superior properties of the polymers and products made from the polymers of the invention as compared to control examples of the bromine containing polymers taught in the prior art.

Example 1

Curable fluoropolymers containing vinylidene fluoride, hexafluoropropylene, tetrafluoroethylene and 4-iodo-3,3,4,4-tetrafluorobutene-1 were prepared by a continuous process having the following steps:

The four components were added continuously into a 2.0 liter stainless steel reactor at 115°C and 6.3 MPa pressure and underwent an emulsion polymerization as they passed through the reactor. The residence time in the reactor was 24 minutes based on the aqueous feed rate of 5 liters per hour using monomer feed rates shown in Table 1. An aqueous solution of ammonium persulfate, sodium hydroxide and Zonyl UR, (Zonyl UR is a mixture of monosodium salts of mono- and bisfluoroalkyl phosphates) was added during the polymerization. The copolymer latex was passed through a container at atmospheric pressure and the off gas (unreacted monomers) was analyzed by gas chromatography. After discarding the latex formed from the first four residence times, a sample of latex was collected. The copolymer was isolated by the gradual addition of a 4% aqueous solution of potassium aluminum sulfate to coagulate the copolymer. These particles were washed with water and dried at 100° to a moisture content of 1%. The polymer obtained was mixed with the following ingredients on a two-roll rubber mill:

100 parts of polymer, 30 parts of medium thermal (MT) carbon black (ASTM designation N-990), 3 parts of lead oxide (Litharge), PbO, 3 parts of peroxide (Luperco 101-XL:45% of 2,5 dimethyl-2,5 di(t-butyl peroxy)hexane adsorbed onto 55% $CaCO_3$; or Luperco-130-XL:45% of 2,5-dimethyl-2,5-di(di-tertiarybutylperoxy)hexyne-3 adsorbed onto 55% $CaCO_3$, see Table II) and 3 parts of triallylisocyanurate. The polymers were press cured at 177°C for 15 minutes, and post cured in a circulating air oven at 232° for 24 hours. Table II shows the physical properties of the vulcanizates.

TABLE I

| | Polymer Samples 1 | 2 | 3 |
|---|---|---|---|
| Feed rate (g/h) | | | |
| Tetrafluoroethylene | 432 | 444 | 444 |
| Vinylidene fluoride | 561 | 531 | 538 |
| Hexafluoropropylene | 843 | 795 | 795 |
| 4-iodo-3,3,4,4-tetra-fluorobutene-1 | 24 | 20 | 13 |
| Ammonium Persulfate g/hr | 6.31 | 7.19 | 7.19 |
| NaOH, g/hr | 2.10 | 2.40 | 2.40 |
| Zonyl UR, g/hr | 4.71 | 4.50 | 4.50 |
| Analysis | | | |
| Overall wt. % conversion of monomer (calc'd.) | 83 | 85 | 87 |
| wt. %I | 0.35 | 0.54 | 0.37 |
| Gel % | 25 | 44 | 31 |
| Mooney Visc. ML-10/121°C | 97 | 52 | 59 |
| Reactor | | | |
| Temperature, °C | 115 | 115 | 115 |
| Residence Time, min | 24 | 24 | 24 |
| Polymer Productivity (g/hr) | 1418 | 1461 | 1523 |
| Composition | | | |
| TFE | 30.0 | 26.7 | 26.4 |
| $VF_2$ | 36.1 | 36.0 | 35.6 |
| HFP | 33.8 | 37.3 | 38.0 |

TABLE II

| Sample | 1 | 2 | 3 |
|---|---|---|---|
| Peroxide | Luperco 130XL | Luperco 101XL | Luperco 101XL |
| Tensile Properties | | | |
| Postcure | | | |
| $M_{100}$, psi (MPa) | 1500(10.3) | 1700(11.7) | 1150(7.9) |
| $T_B$, psi (MPa) | 2800(19.3) | 3300(22.7) | 2850(19.6) |
| $E_B$, % | 160 | 165 | 175 |
| Heat aged 70 hr./275°C | | | |
| $M_{100}$, psi (MPa) | - | 1050(7.2) | 650(4.5) |
| $T_B$, psi (MPa) | - | 2650(18.3) | 2200(15.2) |
| $E_B$, % | - | 190 | 240 |
| ODR | | | |
| $M_L$, in.lbs (N.m) | 9.0(1.0) | 7.0(0.8) | 7.0(0.8) |
| $M_H$, in.lbs (N.m) | 49(5.5) | 49(5.5) | 40(4.5) |
| $t_s2$ (min) | 1.3 | 1.3 | 1.2 |
| t'90 (min) | 2.9 | 2.8 | 2.7 |
| Mc90 in.lbs. (N.m) | 40(4.5) | 45(5.1) | 36(4.1) |
| Compression Set | | | |
| O-Rings | | | |
| 70 hr/R.T. | 17 | 19 | 23 |
| 70 hr/200°C | - | 47 | 52 |

Example 2

Curable fluoropolymers containing vinylidene fluoride, hexafluoropropylene, and 4-iodo-3,3,4,4-tetrafluorobutene-1 were prepared in a continuous process having the following steps:

The three components were added continuously in the amounts reported in Table III into a 2.0 liter stainless steel reactor at 110°, 900 psi (6.3 MPa) and underwent an emulsion polymerization as they passed through the reactor. The residence time was 15 minutes based on the feed rates shown in Table III. An aqueous solution of ammonium persulfate (7.2

g/h), sodium hydroxide (1.8 g/h) and isopropyl alcohol (2.6 g/h) was also added during this polymerization. The polymer was isolated as described in Example 1. The polymer obtained was mixed with the following ingredients on a two roll rubber mill: 100 parts of polymer, 30 parts of medium thermal (MT) carbon black, 3 parts of lead oxide (Litharge), 3 parts of triallyl isocyanurate and Luperco 101-XL (defined in Example 1) (3-4 parts, phr see Table IV). The polymers were press cured at 177° for 15 minutes, then post cured in a circulating air oven for 24 hours at 232°C. The physical properties obtained are shown in Table IV.

TABLE III

| | Polymer Samples 4 | 5 |
|---|---|---|
| Wt % monomer in polymer (calc'd. from mass balance) | | |
| Vinylidene fluoride | 60.8 | 64.7 |
| Hexafluoropropylene | 38.7 | 34.4 |
| 4-iodo-3,3,4,4-tetrafluorobutene-1 | 0.5 | 0.9 |
| Feed rate (g/h) | | |
| Vinylidene fluoride | 1250 | 1250 |
| Hexafluoropropylene | 950 | 950 |
| 4-iodo-3,3,4,4-tetrafluorobutene-1 | 10 | 15 |
| Analysis | | |
| Overall wt. % conversion of monomers (calc'd.) | 89 | 78 |
| %I | 0.22 | 0.41 |
| $M_L$ 10(100°C) | 39 | 34 |

TABLE IV

CURE PROPERTIES OF EXAMPLE 2 POLYMERS

| Polymer sample (see Table III) | 4 | 5 | 5 |
|---|---|---|---|
| Phr Peroxide | 4 | 4 | 3 |
| ODR | | | |
| $M_L$ in.lbs (N.m) | 3.0(0.3) | 2.8(0.3) | 2.0(0.2) |
| $M_H$ in.lbs (N.m) | 20(2.3) | 26(2.9) | 29(3.3) |
| ts2 | 1.0 | 1.3 | 1.0 |
| t'90 | 3.8 | 3.9 | 3.7 |
| $M_C$90 in.lb (N.m) | 18(2.0) | 24(2.7) | 27(3.1) |
| Compression Set O-Rings | | | |
| 70 hrs./25°C | 43 | 29 | 24 |
| 70 hrs./200°C | 74 | 58 | 46 |
| c = crushed | | | |
| Tensile | | | |
| Post Cured | | | |
| $M_{100}$ psi (MPa) | 400(2.8) | 450(3.1) | 600(4.1) |
| $T_B$ psi (MPa) | 2000(13.8) | 2600(17.9) | 2400(16.5) |
| $E_B$ % | 340 | 280 | 230 |
| Heat Aged | | | |
| $M_{100}$ psi (MPa) | 500(3.4) | 650(4.5) | 750(5.2) |
| $T_B$ psi (MPa) | 1550(10.7) | 1900(13.1) | 1700(11.7) |
| $E_B$ % | 290 | 210 | 170 |

Comparison of polymer containing 4-iodo-3,3,4,4-tetrafluorobutene-1 (ITFB) with 4-bromo-3,3,4,4-tetrafluorobutene-1 (BTFB)

In order to make this comparison, polymers having approximately equal mole fractions of the iodinated monomer and the brominated monomer were prepared. The technique employed was that set forth in Example 10 of Apotheker et al. U.S. Patent 4,035,565, except that in the production of the iodinated polymer it was necessary to decrease the feed rate of all monomers and increase the residence

time to 30 minutes in order to sustain the polymerization reaction at high conversion. Table V shows the details of the polymerization conditions, and gives physical and chemical information about the resulting polymers.

TABLE V

| Sample | 8 Polymer containing BTFB | 9 Polymer containing ITFB |
|---|---|---|
| mole % halogen | 0.5 Br | 0.4 I |
| wt % halogen (Found) | 0.5 Br | 0.6 I |
| % gel | 0.1 | 23 |
| ML-10 (100°C) | 129 | 48 |
| Composition (calc'd/found) | | |
| wt % $VF_2$ " " | 62.3/63.7 | 61.4/66.7 |
| wt % HFP " " | 36.5/36.3 | 37.0/33.3 |
| Polymerization Conditions | | |
| Conversion (%) | 80 | 69 |
| Temperature (°C) | 105 | 105 |
| Residence Time (min) | 20 | 30 |
| % Solids | 16.6 | 14.5 |

The two polymers were then cured using the following peroxide cure conditions - not the conditions of Example 10 of Apotheker et al 4,035,565 - and the results compared: 100 parts of polymer, 30 parts medium thermal carbon black; 3 parts Luperco 130XL (composition described in Example 1); 3 parts triallylisocyanurate; 3 parts of lead oxide (Litharge). The results are set forth in Table VI.

TABLE VI

| Sample (mole %) | 6 (0.5% Br) | 7 (0.4% I) |
|---|---|---|
| ODR | | |
| $M_L$ min.lbs (N.m) | 8(0.9) | 3(0.3) |
| $M_H$ max (in.lbs (N.m) | 31(3.5) | 46(5.2) |
| $ts_2$ | 2.0 | 1.8 |
| t'90 | 7.6 | 4.7 |
| $M_C$90 in.lbs (N.m) | 29(3.2) | 42(4.7) |
| Mooney Visc. (ML-10 at 121°C) | 85 | 28 |
| Post cured Tensile | | |
| $M_{100}$ psi (MPa) | 500 (3.4) | 1000 (6.9) |
| $T_B$ psi (MPa) | 3350(23.1) | 2450 (16.9) |
| $E_B$ % | 280 | 160 |
| Heat aged Tensile | | |
| $M_{100}$ psi (MPa) | 500 (3.4) | 1650 (11.4) |
| $T_B$ psi (MPa) | 2100(14.5) | 2050 (14.1) |
| $E_B$ % | 260 | 120 |
| Compression Set-Pellets | | |
| 70h/R.T. | 23 | 15 |
| 70h/200°C | 25 | 14 |

Tables V and VI show significant differences between polymers containing BTFB and ITFB at <u>equal molar levels</u>. In particular, note the following:

1. Substantially more *in situ* gel is formed in the polymerization with ITFB than with BTFB.
2. A lower viscosity polymer formed with ITFB than with BTFB. Lower viscosity provides processing advantages in many applications.
3. The cure rate of polymer containing ITFB is faster than of polymer containing BTFB.
4. A higher cure state is obtained using polymer containing ITFB, than that obtained using polymer containing BTFB.

5. The compression set resistance of polymer containing ITFB is superior than that for polymer containing BTFB.

6. The polymer containing ITFB has a lower viscosity but cures to a higher cure state than does the polymer containing BTFB which had a higher initial viscosity.

Example 3

A curable fluoropolymer containing vinylidene fluoride, hexafluoropropylene, tetrafluoroethylene, 4-iodo-3,3,4,4-tetrafluorobutene-1 and methylene iodide ($CH_2I_2$) was prepared in a continuous process having the following steps:

The five components were added continuously into a 2.0 liter stainless steel reactor at 105°C, and 6.3 MPa, to provide the composition reported in Table VII and underwent an emulsion polymerization as they passed through the reactor. The residence time was 20 minutes based on the feed rates shown in Table VII. An aqueous solution of ammonium persulfate (6.97 g/h), and sodium hydroxide (2.09 g/h) was also added continuously during this polymerization. The polymer was isolated as described in Example 1. The polymer obtained was mixed with the following ingredients on a two-roll rubber mill: 100 parts of polymer, 30 parts of carbon black (MT), 3 parts of lead oxide, PbO, (litharge), 3 parts of triallyisocyanurate and 2 parts of Luperco 130-XL (as defined in Example 1). The polymers were press cured at 177° for 15 minutes, then post cured in a circulating air oven for 24 hours at 232°C. The physical properties obtained are shown in Table VIII.

TABLE VII

| | Polymer Sample |
|---|---|
| Wt % monomer in polymer (calc'd.) | |
| Vinylidene fluoride | 45 |
| Hexafluoropropylene | 30 |
| Tetrafluoroethylene | 24 |
| 4-iodo-3,3,4,4-tetrafluorobutene-1 | 0.8 |
| Methylene iodide | 0.2 |
| Feed rate (g/h) | |
| Vinylidene fluoride | 687 |
| Hexafluoropropylene | 643 |
| Tetrafluoroethylene | 362 |
| 4-iodo-3,3,4,4-tetrafluorobutene-1 | 12.0 |
| Methylene iodide | 3.0 |
| Analysis | |
| Overall wt. % conversion of monomers (calc'd.) | 86 |
| % I | 0.49 |
| % gel | 7 |
| $M_L10$(121°C) | 36 |

TABLE VIII

CURE PROPERTIES OF EXAMPLE 3 POLYMER

| | |
|---|---|
| Polymer sample (see Table VII) | 8 |
| ODR | |
| $M_L$ in.lbs (N.M) | 7.2(0.8) |
| $M_H$ in.lbs (N.M) | 51(5.8) |
| ts2 | 1.2 |
| t'90 | 3.7 |
| $M_C90$ in.lbs (N.M) | 50(5.3) |
| Compression Set-o-rings | |
| Post Cured | |
| 70 hrs. at R.T. | 12 |
| 70 hrs. at 200°C | 36 |
| Stress strain | |
| $M_{100}$ psi (MPa) | 1120(7.7) |
| $T_B$ psi (MPa) | 2860(19.7) |
| $E_B$ % | 160 |
| Heat Aged | |
| $M_{100}$ psi (MPa) | 899(6.2) |
| $T_B$ psi (MPa) | 2710(18.7) |
| $E_B$ % | 200 |

Example 4

A curable fluoropolymer containing vinylidene fluoride, hexafluoropropylene, tetrafluoroethylene and iodotrifluoroethylene was prepared in a continuous process having the following steps:

The four components were added continuously into a 2.0 liter stainless steel reactor at 105°C, and 6.3 MPa, and underwent an emulsion polymerization as they passed through the reactor. The iodotrifluoroethylene was added as a 1:1 molar solution in perfluoro(2-butyl-tetrahydrofuran). The residence time was 12 minutes based on the feed rates

shown in Table IX. An aqueous solution of ammonium persulfate (18.[illegible] g/h), and sodium hydroxide (5.7 g/h) was also added continuously during this polymerization. The polymer was isolated as described in Example 1. The polymer obtained was mixed with the following ingredients on a two-roll rubber mill: 100 parts of polymer, 30 parts of carbon black (MT), 3 parts of lead oxide, PbO, (litharge), 3 parts of triallyisocyanurate and 2 parts of Luperco 130-XL (as defined in Example 1). The polymers were press cured at 177° for 15 minutes, then post cured in a circulating air oven for 24 hours at 232°C. The physical properties obtained are shown in Table X.

TABLE IX

| Wt % monomer in polymer (found) | Polymer Sample 9 |
|---|---|
| Vinylidene fluoride | 47.8 |
| Hexafluoropropylene | 33.0 |
| Tetrafluoroethylene | 19.2 |
| **Feed rate (g/h)** | |
| Vinylidene fluoride | 1184 |
| Hexafluoropropylene | 938 |
| Tetrafluoroethylene | 564 |
| Iodotrifluoroethylene | 17 |
| **Analysis** | |
| Overall wt. % conversion of monomers (calc'd) | 86 |
| % I | 0.42 |
| % gel | 44 |
| $M_L 10$ (100°C) | 64 |

TABLE X

CURE PROPERTIES OF EXAMPLE 4 POLYMER

| | |
|---|---|
| Polymer sample (see Table IX) | 9 |
| ODR | |
| $M_L$ in.lbs (N.M) | 7 (0.8) |
| $M_H$ in.lbs (N.M) | 31 (3.5) |
| $t_s2$ (min) | 1.8 |
| t'90 (min) | 9.3 |
| $M_c90$ in.lbs (N.M) | 28.6 (3.2) |
| Compression Set Pellets | |
| 70 hrs. at 25 | 25 |
| 70 hrs. at 200°C | 33 |
| Stress Strain | |
| Post cure | |
| $M_{100}$ psi (MPa) | 1000 (6.9) |
| $T_B$ psi (MPa) | 3050 (21.0) |
| $E_B$ % | 180 |
| Heat Age | |
| $M_{100}$ psi (MPa) | 850 (5.9) |
| $T_B$ psi (MPa) | 2720 (18.8) |
| $E_B$ % | 200 |

Example 5

A fluoroelastomer composed of 23.2 wt. % TFE/44.0 wt.% $VF_2$/31.9 wt. % HFP/0.76 wt. % ITFB/0.19 wt. % $CH_2I_2$, as calculated by mass balance, was prepared and compounded as described in Example 3.

It was successfully injection molded in a 150 ton Cincinnati Milacron "Hydradamp" machine under the following conditions:

Extruder barrel temperatures:

| | |
|---|---|
| Rear | 87°F |
| Center | 131°F |
| Front | 160°F |
| Nozzle temperature | 167°F |
| Mold Temperatures | |
| Left half : | 197°C |
| Sprue half: | 193°C |
| Injection Pressure | 1500 psi (gauge) |
| Hold Pressure | 1400 psi (gauge) |
| Ram speed | Fast |
| Screw speed | 60 rpm |
| Back pressure | 100 psi |
| Cycle times | |
| Injection time | 5 sec. |
| Pack time | 40 sec. |
| Hold time | 90 sec. |
| Total cycle time (cure time) | 135 sec. |

Type of Cavity

Double "O" ring cavity mold with a runner system which bifurcates from sprue so as to enter two "O" ring cavities with ring gates and cavity dimensions set forth in ASTM D1414-72-15.2.2.4 to produce standard 1" dia. test rings.

Example 6

A curable fluoropolymer containing vinylidene fluoride, hexafluoropropylene, tetrafluoroethylene and iododifluoroethylene was prepared in a continuous process having the following steps:

The four components were added continuously into a 2.0 liter stainless steel reactor at 105°C, and 6.3 MPa, and underwent an emulsion polymerization as they passed through the reactor. The iododifluoroethylene was added as a 1:1 volume

solution in perfluoro(2-butyl-tetrahydrofuran). The residence time was 20 minutes based on the feed rates shown in Table XI. An aqueous solution of ammonium persulfate (6.97 g/h), and sodium hydroxide (2.09 g/h) was also added continuously during this polymerization. The polymer was isolated as described in Example 1. The polymer obtained was mixed with the following ingredients on a two-roll rubber mill: 100 parts of polymer, 30 parts of carbon black (MT), 3 parts of lead oxide, PbO, (litharge), 3 parts of triallyisocyanurate and 2 parts of Luperco 130-XL (as defined in Example 1). The polymers were press cured at 177° for 15 minutes, then post cured in a circulating air oven for 24 hours at 232°C. The physical properties obtained are shown in Table XI.

TABLE XI

| Wt % monomer in polymer (found) | Polymer Sample 10 |
|---|---|
| Vinylidene fluoride | 45.7 |
| Hexafluoropropylene | 27.9 |
| Tetrafluoroethylene | 26.5 |
| Feed rate (g/h) | |
| Vinylidene fluoride | 661 |
| Hexafluoropropylene | 617 |
| Tetrafluoroethylene | 352 |
| Iododifluoroethylene | 11 |
| Analysis | |
| Overall wt. % conversion of monomers (calc'd) | 86 |
| % I | 0.34 |
| % gel | 15 |
| $M_L$10 (100°C) | 46 |

TABLE XII

CURE PROPERTIES OF EXAMPLE 6 POLYMER

| | |
|---|---|
| Polymer sample (see Table XI) | 10 |
| ODR | |
| $M_L$ in.lbs (N.M) | 3 (0.3) |
| $M_H$ in.lbs (N.M) | 38 (4.3) |
| $t_s2$ (min) | 1.6 |
| t'90 (min) | 4.7 |
| $M_c90$ in.lbs (N.M) | 34.5 (3.9) |
| Compression Set Pellets | |
| 70 hrs. at 25°C | 21 |
| 70 hrs. at 200°C | 28 |
| Stress Strain | |
| Post cure | |
| $M_{100}$ psi (MPa) | 638 (4.4) |
| $T_B$ psi (MPa) | 2813 (19.3) |
| $E_B$ % | 225 |

Example 7

A curable fluoropolymer containing vinylidene fluoride, hexafluoropropylene, tetrafluoroethylene and vinyliodide was prepared in a continuous process having the following steps:

The four components were added continuously into a 2.0 liter stainless steel reactor at 105°C, and 6.3 MPa, and underwent an emulsion polymerization as they passed through the reactor. The vinyliodide was added as a 1:1 volume solution in perfluoro(2-butyl-tetrahydrofuran). The residence time was 20 minutes based on the feed rates shown in Table XIII. An aqueous solution of ammonium persulfate (6.97 g/h), and sodium hydroxide (2.09 g/h) was also added continuously during this polymerization. The polymer was isolated as

described in Example 1. The polymer obtained was mixed with the following ingredients on a two-roll rubber mill: 100 parts of polymer, 30 parts of carbon black (MT), 3 parts of lead oxide, PbO, (litharge), 3 parts of triallyisocyanurate and 3 parts of Luperco 130-XL (as defined in Example 1). The polymers were press cured at 177° for 15 minutes, then post cured in a circulating air oven for 24 hours at 232°C. The physical properties obtained are shown in Table XIV.

TABLE XIII

| Wt % monomer in polymer (found) | Polymer Sample 11 |
|---|---|
| Vinylidene fluoride | 48.6 |
| Hexafluoropropylene | 25.6 |
| Tetrafluoroethylene | 25.8 |
| Feed rate (g/h) | |
| Vinylidene fluoride | 689 |
| Hexafluoropropylene | 642 |
| Tetrafluoroethylene | 367 |
| Iodotrifluoroethylene | 5 |
| Analysis | |
| Overall wt. % conversion of monomers (calc'd) | 77 |
| % I | 0.3 |
| % gel | 31 |
| $M_L10$ (100°C) | 70 |

TABLE XIV

CURE PROPERTIES OF EXAMPLE 7 POLYMER

| Polymer sample (see Table XIII) | 11 |
|---|---|
| ODR | |
| $M_L$ in.lbs (N.M) | 6 (0.7) |
| $M_H$ in.lbs (N.M) | 42 (4.7) |
| $t_s2$ (min) | 1.4 |
| t'90 (min) | 6 |
| $M_c90$ in.lbs (N.M) | 38 (4.3) |
| Compression Set Pellets | |
| 70 hrs. at 25°C | 50 |
| 70 hrs. at 200°C | 27 |
| Stress Strain | |
| Post cure | |
| $M_{100}$ psi (MPa) | 750 (5.2) |
| $T_B$ psi (MPa) | 2263 (15.6) |
| $E_B$ % | 185 |
| Heat Age | |
| $M_{100}$ psi (MPa) | 600 (4.1) |
| $T_B$ psi (MPa) | 2288 (15.8) |
| $E_B$ % | 235 |

0171290

Claims:

1. An elastomeric fluoropolymer whose interpolymerized units consist essentially of:

(a) between 0.1 and 2 mole percent, based on the total moles of components (a) and (b), of units derived from the addition polymerization of a compound having the formula:

$$CX_2=\underset{(I)_m}{C}Y(R)_n$$

where I is iodine, X and Y are hydrogen or fluorine, R is selected from the class consisting of (i) alkyl groups of 1 to 6 carbon atom(s) having one or two iodine atom(s) bonded to a carbon atom in the alkyl group, and additional atoms selected from the group consisting of hydrogen, chlorine, and fluorine bonded to the carbon atom(s) in the alkyl group, and (ii) an ether group with an ether oxygen bonded to the $CX_2$=CY groups, containing 2 to 6 carbon atoms in which the one iodine atom and other atoms selected from the group consisting of hydrogen, chlorine and fluorine are bonded to the carbon atoms of the ether group, where n and m are zero or 1, and when n is 1, m is zero and when m is 1, n is zero, and when n is 1 and either X is fluorine, then R is (ii) having a terminal ether link; said (a) units being distributed randomly along all of the polymer molecules; and

(b) a complemental amount of units derived from 45-80 mole % vinylidene fluoride, and the remainder at least one fluorine-containing olefin selected from the class consisting of hexafluoroethylene, pentafluoropropylene, a perfluoroalkyl perfluorovinyl ether in which the alkyl group contains 1 to 5 carbon atoms and optionally tetrafluoroethylene or chlorotrifluoroethylene.

AD-5291-A

2. The fluoropolymer of Claim 1 in which the iodine-containing units are derived from 4-iodo-3,3,4,4,-tetrafluorobutene-1.

3. The fluoropolymer of Claim 1 in which the iodine-containing units are derived from iodo trifluoroethylene.

4. The elastomeric fluoropolymer of Claim 1 in which the (a) units are derived from monomers having the formula, $CH_2=CH(CF_2)_xI$, where x is 0 to 6, $CH_2=CHCFClCF_2I$, $CH_2=CH-O-CF_2-CF_2I$, $CH_2=CH-O-CH_2CH_2I$, $CH_2=CHCF_2CFICF_3$, and $CF_2=CFI$.

5. The fluoropolymer of Claim 4 in which the iodine-containing units are derived from 4-iodo-3,3,4,4,-tetrafluorobutene-1.

6. The fluoropolymer of Claim 4 in which the iodine-containing units are derived from iodo trifluoroethylene.

7. An injection molding process which comprises forming a uniform mixture of the fluoropolymer of any one of claims 1 to 6 and an effective amount of a curing agent, injection molding the fluoropolymer into a heated mold, maintaining the mixture in the heated mold for a time and at a temperature sufficient to form a molded article, and removing the article from the mold.

8. The process of Claim 7 which includes the additional step of heating the molded article after removal from the mold.

9. The process of Claim 7 or Claim 8 in which the curing agent comprises a peroxide.